# EUROPÄISCHE PATENTSCHRIFT

(11) **EP 4 233 030 B1**
(45) Veröffentlichungstag und Bekanntmachung des Hinweises auf die Patenterteilung: **03.12.2025**
(21) Anmeldenummer: 21797976.4
(22) Anmeldetag: 18.10.2021
(51) Int. Cl.: G08G 1/097, G07C 5/00, G07C 5/08, G08G 1/04, G05D 1/00, B60W 60/00, B60W 50/02, B60W 50/029, B60W 50/08, G01S 7/497, G01S 17/931

(54) **VERFAHREN ZUM ÜBERWACHEN EINER SENSORIK EINES FAHRZEUGS UND FREIGABE EINES AUTONOMEN FAHRBETRIEBS FÜR FAHRZEUGE / STRECKEN**
METHOD FOR MONITORING A SENSOR SYSTEM OF A VEHICLE AND RELEASE OF AN AUTONOMOUS DRIVE OPERATION FOR VEHICLES/ROUTES
PROCÉDÉ DE SURVEILLANCE D'UN SYSTÈME DE CAPTEUR D'UN VÉHICULE ET LIBÉRATION D'UNE OPÉRATION DE CONDUITE AUTONOME POUR VÉHICULES/ITINÉRAIRES

(30) Priorität: 20.10.2020 DE 102020006459
(43) Veröffentlichungstag der Anmeldung: 30.08.2023
(73) Patentinhaber: Jenoptik Robot GmbH, 40789 Monheim (DE)
(72) Erfinder: FENDT, Günter, 86529 Schrobenhausen (DE)
(74) Vertreter: Waldauf, Alexander
(86) Internationale Anmeldenummer: PCT/EP2021/078766
(87) Internationale Veröffentlichungsnummer: WO 2022/084228

(56) Entgegenhaltungen:
- DE-A1- 102014 014 120
- DE-A1- 102015 016 888
- DE-A1- 102018 101 110
- US-A1- 2019 041 850
- NISHIMURA YUSUKE ET AL: "A Study on Behavior of Autonomous Vehicles Cooperating with Manually-Driven Vehicles", 2019 IEEE INTERNATIONAL CONFERENCE ON PERVASIVE COMPUTING AND COMMUNICATIONS (PERCOM, IEEE, 11 March 2019 (2019-03-11), pages 212 - 219, XP033578769, DOI: 10.1109/PERCOM.2019.8767390

## Beschreibung

Die Erfindung bezieht sich auf Verfahren zum Überwachen einer Sensorik (insbesondere als Kamera ausgebildet) eines Fahrzeugs und Freigabe eines autonomen Fahrbetriebs für Fahrzeuge für einen folgenden Streckenabschnitt, mittels Zuhilfenahme einer Infrastrukturanlage, sowie eine Infrastrukturanlage und ein Kraftfahrzeug.

Assistenzsysteme mit optischen Umgebungsüberwachungsfunktionen (Kameras) erlangen eine immer höhere Markdurchdringung, da diese neben einem Sicherheitsgewinn auch einen Komfortzuwachs für den Fahrzeugführer bedeuten.

So sind beispielsweise Spurhalteassistenten bekannt, welche den Fahrzeugführer warnen, wenn die Gefahr besteht, dass das Fahrzeug von der Spur abkommt.

Primär werden Kameras in Fahrtrichtung ausgerichtet, wobei auch nach hinten gerichtete Kameras (Rückfahrkamera) zum Einsatz kommen.

Das Thema "autonome Fahrzeugführung", bzw. "pilotiertes Fahren" (automatische Fahrzeugführung) beschreibt einen Mega-Trend in der Kfz-Industrie, an diesem die Fachwelt mit Nachdruck arbeitet.

Die DE 10 2018 101 110 A1 beschreibt Techniken und Beispiele in Bezug auf Fahrzeugsensorzustandsüberwachungen bei autonom fahrenden Fahrzeugen.

Ein wesentlicher Baustein, bzw. wesentliche Komponenten für die automatische Fahrzeugführung sind hierbei die umgebungserfassenden Systeme, insbesondere Kamerasysteme, mittels diesen
a) sowohl die umgebende Verkehrssituation,
b) wie auch die eigene Position auf der Fahrbahn,
erfasst wird/werden.

### Mit anderen Worten:

Für einen autonomen Fahrbetrieb ist eine 100%ige Funktionalität / 100%ige Funktionsfähigkeit der umgebungserfassenden Systeme, insbesondere Kamerasysteme, unerlässlich.

### Beispiel:

Hätte eine Kamera einen Justagefehler ("Blick" ca. 50 cm zu weit nach rechts), so würde als Folge davon das Fahrzeug aufgrund dieses Justagefehlers im autonomen Fahrbetrieb nicht mehr in der vorgesehenen Fahrbahnmitte ("b/2") fahren, sondern um den Betrag (ca. 50 cm nach links) versetzt, wobei der Versatz infolge des Justagefehlers verursacht wird.

### Mit anderen Worten:

Der Justagefehler würde vom Assistenzsystem dadurch kompensiert werden, indem das Assistenzsystem das Fahrzeug solange in die andere Richtung steuert, bis das Assistenzsystem "erkennt", dass das Fahrzeug wieder "mittig" ("b/2") in der vorgesehenen Fahrbahntrajektorie ist.

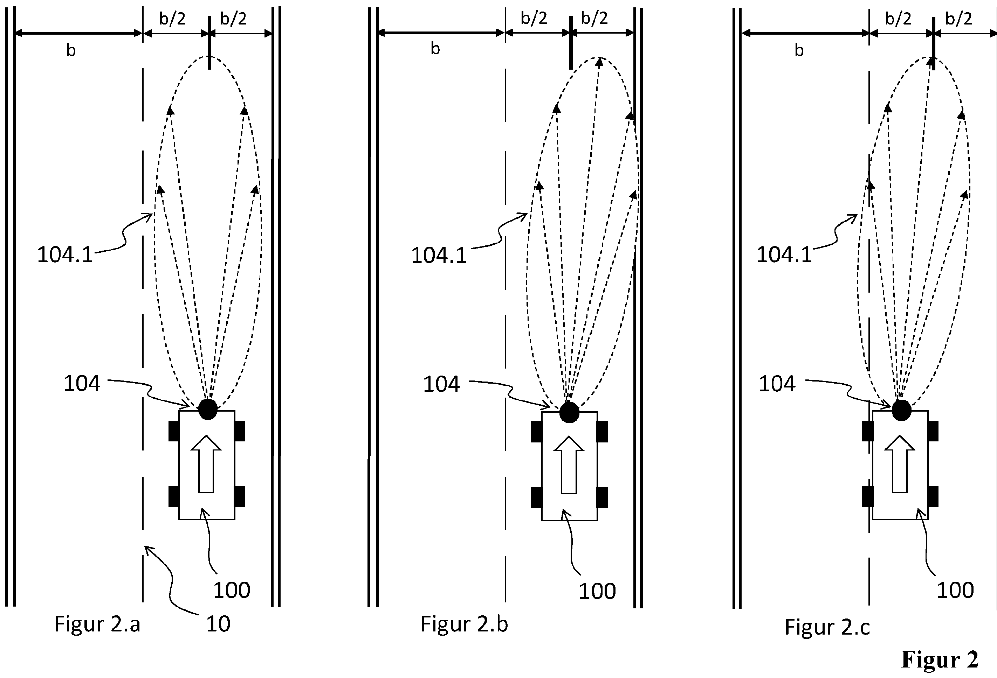

Zum leichteren Verständnis bitte die Figur 2 betrachten. (Die Abweichung ist nicht maßstabsgetreu - im Prinzip schadet bereits ein Winkelfehler von 1 Grad).

Der Begriff "Justagefehler" ist als Sammelbegriff zu verstehen, bzw. unter dem Begriff "Justagefehler" sind im Lichte der Erfindung alle die Fehler zu verstehen, welche dazu führen, dass der Erfassungsbereich des Umgebungserfassungssystems (optische Achse) nicht mehr in der ursprünglich gemäß Systemkonstruktion vorgesehenen Ausrichtung verläuft (von der ursprünglich gemäß Systemkonstruktion vorgesehenen Ausrichtung abweichen ist). Wie die später folgenden Beispiele / Figuren zeigen, wäre es fatal, bzw. hätte es fatale Folgen, wenn das Fahrzeug infolge eines ausgebildeten Justagefehlers und/oder ein "schleichender" Justagefehlers, versetzt in der dafür vorgesehenen Fahrspur bewegt wird / werden würde.

Daher gilt es, dass die in Fahrzeugen eingesetzte/n Sensorik, bzw. Sensoriken, deren korrekte Funktion sicherzustellen ist.

Die DE 10 2016 000 532 A1 schlägt dazu eine Kalibrierung einer Einrichtung eines Fahrzeugs, beispielsweise eines Tachometers, unter Verwendung eines Verkehrsüberwachungsgeräts vor.

Aus der Schrift DE 10 2018 106 594 A1 ist ein Verfahren zum Überwachen und/oder Detektieren einer Sensorik eines Fahrzeugs bekannt, wobei dieses Verfahren einen Schritt des Ermittelns eines Parameterwerts unter Verwendung eines Antwortsignals, und einen Schritt des Bestimmens eines der Sensorik zuordenbaren Überwachungssignals unter Verwendung des Parameterwerts und eines vorbestimmten Reaktionswerts umfasst.

Wie aus der Schrift DE 10 2018 106 594 A1 weiter offenbart wird, kann das Verfahren einen Schritt des Aussendens umfassen, in dem zumindest ein das Anregungsereignis bewirkendes Signal unter Verwendung des Anregungssignals ausgesendet wird. Bei einem solchen Signal kann es sich um ein akustisches und/oder ein elektromagnetisches Signal handeln. Zum Aussenden eines solchen Signals kann eine geeignete Sendeeinrichtung, beispielsweise eine Lichtquelle verwendet werden. Auf diese Weise kann das Anregungsereignis sehr schnell und einfach hervorgerufen werden. Beispielsweise kann im Schritt des Aussendens als das elektromagnetische Signal ein Lichtimpuls in Richtung des Fahrzeugs ausgesendet werden. Ein solcher Lichtimpuls kann beispielsweise ein entgegenkommendes Fahrzeug simulieren, sodass die Antwortreaktion eine Reaktion einer adaptiven Fahrzeugbeleuchtung des Fahrzeugs sein kann. Auch kann als das elektromagnetische Signal ein im Vorfeld des Fahrzeugs erscheinender Lichtvorhang oder Strahlungswellenvorhang ausgesendet werden. Dazu kann beispielsweise ein Laser unter Verwendung des Anregungssignals geeignet angesteuert werden. Auf diese Weise kann ein sich im Vorfeld des Fahrzeugs befindliches Hindernis simuliert werden, sodass die Antwortreaktion ein Bremsmanöver oder ein Lenkmanöver des Fahrzeugs sein kann.

Hinsichtlich einer Prüfmethode bzw. Überwachungsverfahrens zur Erkennung eines ausgebildeten Justagefehlers an einer Sensorik und/oder eines "schleichenden" Justagefehlers an einer Sensorik ist aus dem allgemeinen Stand der Technik nur wenig bekannt, bzw. bleibt der Betrachter bzgl. einer konkreten Realisierung im Dunkeln.

Ein weiterer Aspekt der Erfindung betrifft die "autonome Fahrzeugführung", bzw. "pilotiertes Fahren" (automatische Fahrzeugführung), insbesondere aus Sicht der Infrastruktur, da es für den autonomen Fahrbetrieb erforderlich ist, dass die dazu zu befahrende Fahrstrecke für den autonomen Fahrbetrieb geeignet bzw. freigegeben ist, wobei es insbesondere in der Übergangszeit, in dieser sowohl eine autonome Fahrzeugführung als auch eine manuelle (traditionelle) Fahrzeugführung auf demselben Streckenabschnitt stattfinden soll, und somit nicht alle Fahrzeuge "systemkontrolliert" gesteuert werden, eines besonderen Augenmerkes bedarf, wenn es um die Freigabe für einen autonomen Fahrmodus für einen bestimmten folgenden Streckenabschnitt geht. Unter dem Begriff "folgender Streckenabschnitt" ist im Lichte der Erfindung ein Streckenabschnitt einer Fahrstrecke zu betrachten, welcher in Fahrtrichtung eines Fahrzeugs sich befindet, und von diesem Fahrzeug demnächst befahren wird / werden soll.

### Aufgabe der Erfindung:

Die Aufgabe der Erfindung kann darin gesehen werden, dass ein ausgebildeter Justagefehler an einer Sensorik und/oder ein "schleichender" Justagefehler an einer Sensorik zu keiner Gefährdung führt, bzw. bei der Überprüfung sicher erkannt wird,
bzw. ein autonomer Fahrbetrieb für einen folgenden Streckenabschnitt nur dann freigegeben wird, wenn sich keine oder nur wenige Fahrzeuge auf dem besagten folgenden Streckenabschnitt befinden, welche eine Gefährdung darstellen könnten.

### Lösung der Erfindung:

Diese Aufgabe wird durch ein Verfahren nach den Ansprüchen 1 oder 2 und eine Vorrichtung nach Anspruch 7 gelöst.

Vorteilhafte Weiterbildungen sind in den abhängigen Ansprüchen angegeben.

### Beschreibung der Erfindung:

Um eine weitere Optimierung auf dem Gebiet zum Überwachen einer Sensorik eines Fahrzeugs und Freigabe eines autonomen Fahrbetriebs des Fahrzeugs, mittels Zuhilfenahme einer Infrastrukturanlage, zu erlangen, wird ein Verfahren vorgeschlagen, wobei das Verfahren seitens der Infrastrukturanlage mindestens die folgenden Schritte umfasst:
a) Ermitteln einer Position des Fahrzeugs, relativ zum aktuell befahrenen Fahrstreifen einer mehrspurigen Fahrbahn, mittels Zuhilfenahme von Mitteln der Infrastrukturanlage; und
b) Empfangen einer Positionsinformation des Fahrzeugs vom Fahrzeug oder von einer Komponente des Fahrzeugs, basierend auf der Sensorik des Fahrzeugs, welche die ermittelte Position des Fahrzeugs relativ zum aktuell befahrenen Fahrstreifen einer mehrspurigen Fahrbahn beschreibt; und
c) Bestimmen einer möglichen Abweichung der Position des Fahrzeugs, durch vergleichende Auswertung
   - der ermittelten Position des Fahrzeugs mittels Mitteln der Infrastrukturanlage, gegenüber
   - der ermittelten Position des Fahrzeugs mittels der Sensorik des Fahrzeugs;
d) wobei im Schritt des Bestimmens einer möglichen Abweichung der Position des Fahrzeugs, im Falle einer Erkennung einer Abweichung größer eines vorgegebenen und/oder vorgebbaren Wertes,
   - als Reaktion bei einer Abweichung größer eines vorgegebenen und/oder vorgebbaren Wertes,
   - eine Information von der Infrastrukturanlage an das Fahrzeug gesendet wird,
   - dass einer Freigabe des autonomen Fahrbetriebs des Fahrzeugs nicht stattgegeben wird.

Erfindungsgemäß wird weiter als weitere Ausführungsform hierfür, um eine weitere Optimierung auf dem Gebiet zum Überwachen einer Sensorik mindestens eines Fahrzeugs und Freigabe eines autonomen Fahrbetriebs für Fahrzeuge für einen folgenden Streckenabschnitt, mittels Zuhilfenahme einer Infrastrukturanlage zu erlangen, ein Verfahren vorgeschlagen, wobei das Verfahren seitens der Infrastrukturanlage mindestens die folgenden Schritte umfasst:
a) Ermitteln einer Position des mindestens einen Fahrzeugs, relativ zum aktuell befahrenen Fahrstreifen einer mehrspurigen Fahrbahn, mittels Zuhilfenahme von Mitteln der Infrastrukturanlage; und
b) Empfangen einer Positionsinformation des mindestens einen Fahrzeugs vom Fahrzeug oder von einer Komponente des Fahrzeugs, basierend auf der Sensorik des Fahrzeugs, welche die ermittelte Position des Fahrzeugs relativ zum aktuell befahrenen Fahrstreifen einer mehrspurigen Fahrbahn beschreibt; und
c) Bestimmen einer möglichen Abweichung der Position des mindestens einen Fahrzeugs, durch vergleichende Auswertung
   - der ermittelten Position des Fahrzeugs mittels Mitteln der Infrastrukturanlage, gegenüber
   - der ermittelten Position des Fahrzeugs mittels der Sensorik des Fahrzeugs;
d) wobei im Schritt des Bestimmens einer möglichen **Ab**weichung der Position des mindestens einen Fahrzeugs, im Falle einer Erkennung einer Abweichung größer eines vorgegebenen und/oder vorgebbaren Wertes,
   - als Reaktion bei einer Abweichung größer eines vorgegebenen und/oder vorgebbaren Wertes bei einer Mindestanzahl an Fahrzeugen, welche sich gleichzeitig auf dem folgenden Streckenabschnitt befinden, und/oder sich zukünftig auf dem folgenden Streckenabschnitt befinden,
   - eine Information von der Infrastrukturanlage an das mindestens eine Fahrzeug gesendet wird,
   - dass einer Freigabe des autonomen Fahrbetriebs der Fahrzeuge für den folgenden Streckenabschnitt nicht stattgegeben wird, und/oder eine bereits erfolgte Freigabe revidiert wird.

Unter der Ausdrucksweise "eine bereits erfolgte Freigabe revidiert wird" ist im Lichte der Erfindung zu verstehen, dass sofern eine Freigabe des autonomen Fahrbetriebs des Fahrzeugs und/oder der Fahrzeuge für den folgenden Streckenabschnitt in einer früheren Entscheidung bereits stattgegeben wurde, dass diese Entscheidung zurückgenommen wird, bzw. der folgende Streckenabschnitt für den autonomen Fahrbetrieb gesperrt ist. Der wesentliche Unterschied zwischen den beiden zuvor beschriebenen Ausführungsformen besteht im Wesentlichen darin, dass sich die Freigabe bei der erstgenannten Ausführungsform auf ein Fahrzeug (als Individuum) bezieht, wohingegen sich bei der zweitgenannten Ausführungsform sich die Freigabe auf einen folgenden Streckenabschnitt bezieht, wobei die Freigabe nicht für ein Einzelfahrzeug bezogen ist, sondern die Fahrzeuge betrifft, welche den folgenden Streckenabschnitt befahren und für den autonomen Fahrbetrieb / Fahrmodus entsprechend geeignet sind.

Die Ausdrucksweise "Erkennung einer Abweichung bei mindestens einem Fahrzeug (oder mehreren Fahrzeugen)" trifft auch dann bei einem Fahrzeug zu, wenn es sich bei dem Fahrzeug um ein älteres Fahrzeug oder um einen sogenannten Oldtimer handelt, welcher über keine Sensorik (Kamerasystem) zur Positionsermittlung bzw. keine Mittel für eine Car-to-Infrastruktur-Kommunikation verfügt, und einen Streckenabschnitt mit Infrastrukturanlage befährt, sodass die Überprüfung der Position des Fahrzeugs relativ zum Fahrstreifen von der Infrastrukturanlage letztendlich nicht mit Positionsdaten von der Sensorik des Fahrzeugs stammend verifiziert / verglichen werden kann, und dadurch automatisch keine Übereinstimmung zwischen den zu vergleichenden Positionsdaten (Positionsdaten ermittelt von Mitteln der Infrastrukturanlage und der Sensorik des Fahrzeugs) erzielt werden kann. In diesem Fall erkennt die Infrastrukturanlage ein Fahrzeug, bei diesem eine Abweichung größer eines vorgegebenen und/oder vorgebbaren Wertes vorliegt, bzw. ein Fahrzeug, welches einen Fehler aufweist (eine Gefährdung darstellt / für das Kollektiv an autonom fahrenden Fahrzeugen eine Gefährdung darstellt) und nicht für den autonomen Fahrbetrieb / Fahrbetriebsmodus geeignet ist. Ein entsprechender Zähler, wie dieser zur Ermittlung der Fahrzeuge für einen bestimmten Streckenabschnitt gemäß nächstem Absatz benötigt wird, wird in diesem Fall entsprechend inkrementiert. Das Dekrementieren des Zählers für einen definierten folgenden Streckenabschnitt erfolgt, wenn ein "fehlerhaftes" Fahrzeug das definierte Streckenende erreicht, bzw. den relevanten Streckenabschnitt dann wieder verlässt.

In einer weiteren vorteilhaften Ausführungsform der Erfindung, zeichnet sich das Verfahren zum Überwachen einer Sensorik eines Fahrzeugs und Freigabe eines autonomen Fahrbetriebs für Fahrzeuge für einen folgenden Streckenabschnitt mittels Zuhilfenahme einer Infrastrukturanlage dadurch aus, dass es sich bei der Mindestanzahl an Fahrzeugen, um mindestens zwei Fahrzeuge, oder drei Fahrzeuge, oder vier Fahrzeuge, oder fünf Fahrzeuge, oder sechs Fahrzeuge, oder sieben Fahrzeuge, oder acht Fahrzeuge, oder neun Fahrzeuge, oder zehn Fahrzeuge, oder größer zehn Fahrzeugen, handelt.

In einer weiteren vorteilhaften Ausführungsform der Erfindung, zeichnet sich das Verfahren zum Überwachen einer Sensorik eines Fahrzeugs und Freigabe eines autonomen Fahrbetriebs für Fahrzeuge für einen folgenden Streckenabschnitt mittels Zuhilfenahme einer Infrastrukturanlage dadurch aus, dass bei der Festlegung der Mindestanzahl an Fahrzeugen gemäß vorangegangener Beschreibung, die Gesamtanzahl an Fahrzeugen berücksichtigt wird, welche sich aktuell auf dem folgenden Streckenabschnitt befinden.

Mittels diesem funktionalem Zusammenhang bzw. Abhängigkeit wird dem Umstand Rechnung getragen, desto größer die Verkehrsdichte auf dem relevanten Streckenabschnitt ist, desto geringer sollte die Zahl an Fahrzeugen sein, die nicht autonom an Verkehrsführung teilnehmen, da in einem Kollektiv von autonom geführten Fahrzeugen ein manuelle von einem Fahrzeugführer geführtes Fahrzeug quasi einen "unkontrollierbaren Fremdkörper" darstellt, und somit für das Kollektiv von autonom geführten Fahrzeugen eine größere Gefährdung darstellt, als ein Fahrzeug aus dem Kollektiv von autonom geführten Fahrzeugen.

In einer weiteren vorteilhaften Ausführungsform der Erfindung, zeichnet sich das Verfahren zum Überwachen einer Sensorik eines Fahrzeugs und Freigabe eines autonomen Fahrbetriebs für Fahrzeuge für einen folgenden Streckenabschnitt mittels Zuhilfenahme einer Infrastrukturanlage dadurch aus, dass bei der Festlegung der Mindestanzahl an Fahrzeugen gemäß vorangegangener Beschreibung, neben der Gesamtanzahl an Fahrzeugen, welche sich aktuell auf dem folgenden Streckenabschnitt befinden, zusätzlich die Länge des relevanten folgenden Streckenabschnitts berücksichtigt wird.

Mittels diesem funktionalem Zusammenhang bzw. Abhängigkeit wird dem Umstand Rechnung getragen, desto größer die Verkehrsdichte auf dem relevanten Streckenabschnitt ist, desto geringer sollte die Zahl an Fahrzeugen sein, die nicht autonom an Verkehrsführung teilnehmen, da in einem Kollektiv von autonom geführten Fahrzeugen ein manuelle von einem Fahrzeugführer geführtes Fahrzeug quasi einen "unkontrollierbaren Fremdkörper" darstellt, und somit für das Kollektiv von autonom geführten Fahrzeugen eine größere Gefährdung darstellt, als ein Fahrzeug aus dem Kollektiv von autonom geführten Fahrzeugen. Um hier eine genauere Entscheidungsgrundlage zu erlangen, wird neben der Verkehrsdichte auf dem relevanten Streckenabschnitt, zusätzlich die Länge des relevanten folgenden Streckenabschnitts berücksichtigt, um bezüglich der Verkehrsdichte eine genauere Aussagekraft hinsichtlich der durchschnittlichen Verkehrsdichte **(z.B.** Fahrzeuge pro 100 m Streckenabschnitt) zu erlangen.

In einer weiteren vorteilhaften Ausführungsform der Erfindung, zeichnet sich das Verfahren zum Überwachen einer Sensorik eines Fahrzeugs und Freigabe eines autonomen Fahrbetriebs für Fahrzeuge für einen folgenden Streckenabschnitt mittels Zuhilfenahme einer Infrastrukturanlage dadurch aus, dass bei der Festlegung der Mindestanzahl an Fahrzeugen gemäß vorangegangener Beschreibung, neben der Gesamtanzahl an Fahrzeugen, welche sich aktuell auf dem folgenden Streckenabschnitt befinden, sowie der Länge des relevanten folgenden Streckenabschnitts, zusätzlich die Anzahl an Fahrstreifen einer mehrspurigen Fahrbahn berücksichtigt wird.

Mittels diesem funktionalem Zusammenhang bzw. Abhängigkeit wird dem Umstand Rechnung getragen, desto größer die Verkehrsdichte auf dem relevanten Streckenabschnitt ist, desto geringer sollte die Zahl an Fahrzeugen sein, die nicht autonom an Verkehrsführung teilnehmen, da in einem Kollektiv von autonom geführten Fahrzeugen ein manuelle von einem Fahrzeugführer geführtes Fahrzeug quasi einen "unkontrollierbaren Fremdkörper" darstellt, und somit für das Kollektiv von autonom geführten Fahrzeugen eine größere Gefährdung darstellt, als ein Fahrzeug aus dem Kollektiv von autonom geführten Fahrzeugen. Um hier eine genauere Entscheidungsgrundlage zu erlangen, wird neben der Verkehrsdichte auf dem relevanten Streckenabschnitt, zusätzlich die Anzahl der zur Verfügung stehenden Fahrstreifen des relevanten folgenden Streckenabschnitts berücksichtigt, um bezüglich der Verkehrsdichte eine genauere Aussagekraft hinsichtlich der durchschnittlichen Verkehrsdichte (z.B. Fahrzeuge pro 100 m Streckenabschnitt pro Fahrstreifen) zu erlangen.

Erfindungsgemäß wird weiter eine Infrastrukturanlage vorgeschlagen, wobei die Infrastrukturanlage eines oder mehrere der oben genannte Verfahrens-Merkmale aufweist.

Erfindungsgemäß wird weiter ein Kraftfahrzeug vorgeschlagen, wobei das Kraftfahrzeug ausgebildet ist zur Kommunikation mit einer Infrastrukturanlage und zur Bereitstellung von Positionsdaten des Fahrzeugs, zur Unterstützung der Infrastrukturanlage zur Durchführung des erfindungsgemäßen Verfahrens.

Die Ausdrucksweise "ein autonomer Fahrbetrieb für einen folgenden Streckenabschnitt nur dann freigegeben wird, wenn sich keine oder nur wenige Fahrzeuge auf dem besagtem folgenden Streckenabschnitt befinden, welche eine Gefährdung darstellen könnten" ist im Lichte der Erfindung derart zu verstehen, bzw. berücksichtigt den Umstand, dass ein autonomer Fahrbetrieb auf einem Streckenabschnitt umso sicherer erfolgen kann, umso weniger Fahrzeuge sich auf dem Streckenabschnitt befinden, welche manuell von einem Fahrzeugführer geführt werden, da ein manuell geführtes Fahrzeug, gegenüber einem Kollektiv von autonom geführten Fahrzeugen, quasi einen "unkontrollierbaren Fremdkörper" darstellt, und daher für das Kollektiv von autonom geführten Fahrzeugen eine größere Gefährdung darstellt, als ein Fahrzeug aus dem Kollektiv von autonom geführten Fahrzeugen.

Zur Klarstellung sei ergänzend angemerkt, dass ein Fahrzeug welches die Voraussetzungen für einen autonomen Fahrbetrieb erfüllt, bzw. von der Infrastrukturanlage (nach erfolgreichem Vergleich der Positionsdaten) eine Freigabe für den autonomen Fahrbetrieb erhalten hat, als autonom fahrendes Fahrzeug klassifiziert wird, auch wenn es darauffolgend (weiterhin) manuell von einem Fahrzeugführer geführt / gesteuert wird, da ein Fahrzeug welches die Voraussetzungen für einen autonomen Fahrbetrieb erfüllt, im Fahrzeug entsprechende Fahrerassistenzsysteme hat, welche den Fahrzeugführer auch bei der manuellen Fahrzeugführer unterstützen, bzw. bei Gefahr entsprechend warnen, und somit ein Fahrzeug welches die Voraussetzungen für einen autonomen Fahrbetrieb erfüllt eine geringere Gefahr für ein Kollektiv an autonom fahrenden Fahrzeugen darstellt, als ein Fahrzeug, bei diesem das Fahrzeug manuell geführt wird und der Fahrzeugführer mehr oder minder auf sich alleine gestellt ist, bzw. nicht entsprechend von einem oder mehreren Fahrerassistenzsystemen unterstützt wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der Breite des aktuell befahrenen Fahrstreifens einer mehrspurigen Fahrbahn gebildet wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der aktuellen Geschwindigkeit des Fahrzeugs gebildet wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von dem aktuellen Verkehrsaufkommen des aktuell befahrenen Fahrstreifens und dessen angrenzenden Fahrstreifen einer mehrspurigen Fahrbahn gebildet wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion von der aktuellen witterungsbedingten Gegebenheiten gebildet wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes mittels einer Funktion einer Kombination von zwei oder mehreren Merkmalen der oben / zuvor genannten Merkmale gebildet wird.

In einem weiteren Beispiel, das nicht unter die Ansprüche fällt, zeichnet sich das Verfahren zum Überwachen einer Sensorik eines Fahrzeugs und Freigabe eines autonomen Fahrbetriebs mittels Zuhilfenahme einer Infrastrukturanlage dadurch aus, dass im Schritt des Bestimmens einer möglichen Abweichung der Position des Fahrzeugs, hinsichtlich der Abweichung größer eines vorgegebenen und/oder vorgebbaren Wertes, der Betrag des vorgegebenen und/oder vorgebbaren Wertes, dieser
- als relativer Wert zur Breite des aktuell befahrenen Fahrstreifens einer mehrspurigen Fahrbahn gebildet wird, und/oder
- als absoluter Wert zur Breite des aktuell befahrenen Fahrstreifens einer mehrspurigen Fahrbahn gebildet wird.

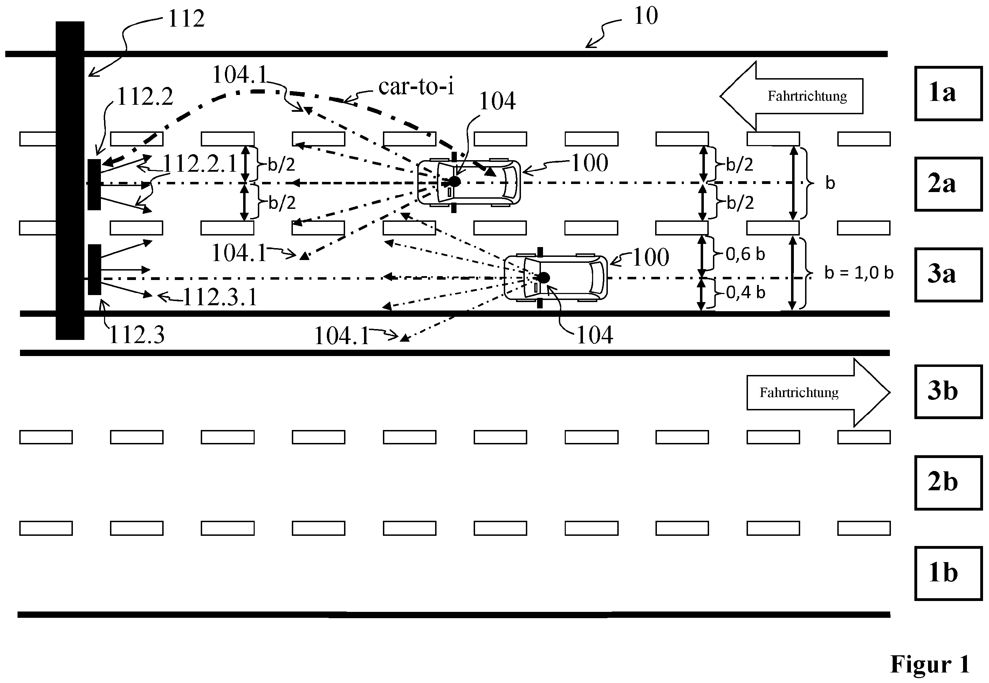

Im Folgenden wird die Erfindung anhand der Figuren 1 bis 6 beispielhaft näher erläutert. Die Figuren und die darin genannten / zu entnehmenden Werteangaben (soweit vorhanden) sind nur beispielhaft und dienen zum leichteren Verständnis.

Alle Figuren sind nur Prinzip-Darstellungen (nicht maßstabsgetreu).

Es zeigen schematisch:
- Figur 1:: Eine schematische Darstellung eines Verkehrsszenarios bei diesem sich zwei Kraftfahrzeuge einer Infrastrukturanlage nähern;
- Figur 2:: Eine Prinzip-Darstellung eines Fahrzeugs, dass eine Fahrbahn / einen Fahrstreifen befährt, sowie die Folgen einer Fehljustage / einer Fehlausrichtung des Erfassungsbereiches (optischen Achse) des Umgebungserfassungssystems;
- Figur 3:: Eine beispielhafte Darstellung an Verfahrensschritten bzgl. einer vergleichenden Auswertung seitens der Infrastrukturanlage (insbesondere auf die Freigabe für ein individuelles passierendes Fahrzeug gerichtet);
- Figur 4:: Eine beispielhafte Darstellung an Verfahrensschritten bzgl. einer vergleichenden Auswertung seitens der Infrastrukturanlage (insbesondere auf die Freigabe für einen folgenden Streckenabschnitt gerichtet);
- Figur 5:: Eine schematische Darstellung bezüglich des Betrags des vorgegebenen und/oder vorgebbaren Wertes, welcher mittels einer Auswahl einer Funktion bzw. Kombination an Funktionen gebildet wird;
- Figur 6:: Eine schematische Darstellung bezüglich der zulässigen Anzahl an Fahrzeugen (bezogen auf einen Streckenabschnitt), die keine Freigabe für einen autonomen Fahrbetrieb erhalten haben, welche mittels einer Auswahl einer Funktion bzw. Kombination an Funktionen gebildet wird;

Die Figur 1 zeigt eine schematische Darstellung eines Verkehrsszenarios bei diesem sich zwei Kraftfahrzeuge (100) einer Infrastrukturanlage (112) nähern. Wie aus der Figur 1 hierzu ersichtlich ist, befindet sich eine Infrastrukturanlage (112) über drei Fahrstreifen (1a, 2a, 3a) einer mehrspurigen Fahrbahn (10). Die Infrastrukturanlage (112) besitzt (z.B. an dieser angebracht / integriert) Mittel (112.2, 112.3) zur Erfassung der Fahrzeuge (100), welche die Fahrstreifen (1a, 2a, 3a) der mehrspurigen Fahrbahn (10) befahren. Aus Gründen der Übersichtlichkeit sind nur zwei Mittel (112.2, 112.3) für die beiden Fahrstreifen (2a, 3a) zur Erfassung der beiden Fahrzeuge (100) auf den beiden Fahrstreifen (2a, 3a) gezeigt, wobei die Erfassungscharakteristik (112.2.1, 112.3.1) der beiden Mittel (112.2, 112.3) nur symbolisch dargestellt sind, da der Erstreckungsbereich / Erfassungsbereich in der Realität deutlich weiter reichend ist / erstreckend ist. Die Mittel (112.2, 112.3) der Infrastrukturanlage (112) sind insbesondere als umgebungserfassende Systeme (Kameras) realisiert. Das Mittel (112.2) der Infrastrukturanlage (112) erfasst das Fahrzeug (100) welches sich auf dem Fahrstreifen (2a) befindet, bzw. den Fahrstreifen (2a) befährt. Das Mittel (112.3) der Infrastrukturanlage (112) erfasst das Fahrzeug (100) welches sich auf dem Fahrstreifen (3a) befindet, bzw. den Fahrstreifen (3a) befährt.

Wie aus der Figur 1 hierzu weiter ersichtlich ist, befindet das Fahrzeug (100), welches den Fahrstreifen (2a) befährt, mittig zum Fahrstreifen (2a), wobei der Fahrstreifen (2a) eine Breite (b) aufweist. Als Ergebnis hiervon resultiert, dass das Mittel (112.2) der Infrastrukturanlage (112) das Fahrzeug (100) auf dem Fahrstreifen (2a) derart erfasst, dass dies mittig (b/2, b/2) zum Fahrstreifen (2a) sich befindet.

Wie aus der Figur 1 hierzu weiter ersichtlich ist, befindet das Fahrzeug (100), welches den Fahrstreifen (3a) befährt, nicht mittig zum Fahrstreifen (3a), wobei der Fahrstreifen (3a) eine Breite (b) aufweist. Das Fahrzeug (100) befährt den Fahrstreifen (3a) mit einem Versatz, wobei der Versatz innerhalb der Fahrstreifenbreite (b) ein Verhältnis von 0,4 b zu 0,6 b bildet. Als Ergebnis hiervon resultiert, dass das Mittel (112.3) der Infrastrukturanlage (112) das Fahrzeug (100) auf dem Fahrstreifen (3a) derart erfasst, dass dies nicht mittig (b/2, b/2), sondern 40% und 60% (0,4 b zu 0,6 b) zum Fahrstreifen (3a) sich befindet.

Wie aus der Figur 1 weiter ersichtlich ist, weisen beide Fahrzeuge (100) je eine Sensorik (104) auf, welche je eine in Fahrtrichtung weisende Erfassungscharakteristik (104.1) aufweisen.

Wie aus der Figur 1 hierzu weiter ersichtlich ist, befindet das Fahrzeug (100), welches den Fahrstreifen (2a) befährt, mittig zum Fahrstreifen (2a), wobei der Fahrstreifen (2a) eine Breite (b) aufweist. Als Ergebnis hiervon resultiert, dass die Sensorik (104) des Fahrzeugs auf dem Fahrstreifen (2a) das Fahrzeug (100) relativ zum Fahrstreifen (2a) derart erfasst, dass dies mittig (b/2, b/2) zum Fahrstreifen (2a) sich befindet.

Wie aus der Figur 1 hierzu weiter ersichtlich ist, befindet das Fahrzeug (100), welches den Fahrstreifen (3a) befährt, nicht mittig zum Fahrstreifen (3a), wobei der Fahrstreifen (3a) eine Breite (b) aufweist. Das Fahrzeug (100) befährt den Fahrstreifen (3a) mit einem Versatz, wobei der Versatz innerhalb der Fahrstreifenbreite (b) ein Verhältnis von 0,4 b zu 0,6 b bildet. Als Ergebnis hiervon resultiert, dass die Sensorik (104) des Fahrzeugs auf dem Fahrstreifen (3a) das Fahrzeug (100) relativ zum Fahrstreifen (3a) derart erfasst, dass dies nicht mittig (b/2, b/2), sondern 40% und 60% (0, 4 b zu 0,6 b) zum Fahrstreifen (3a) sich befindet.

Bei einer nachfolgenden vergleichenden Auswertung der ermittelten Positionen des Fahrzeugs (100) eines jeweiligen Fahrstreifens (2a, 3a), mit dem Ziel der Überwachung einer Sensorik (104) eines Fahrzeugs (100) mittels Zuhilfenahme einer Infrastrukturanlage (112), werden die korrelierenden Ergebnisse (eines bestimmten Fahrstreifens betreffend) miteinander verglichen, indem ein Vergleich erfolgt zwischen
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100).

Wie aus der Figur 1 weiter ersichtlich ist, ist das Kraftfahrzeug (100) / sind die Kraftfahrzeuge (100), wie auch die Infrastrukturanlage (112), bzw. Mittel (112.2, 112.3) der Infrastrukturanlage (112) derart realisiert, dass eine Car-to-Infrastruktur-Kommunikation (car-to-i) möglich ist, damit die in den einzelnen Messungen zur Fahrzeugpositionsbestimmung ermittelten Ergebnisse, untereinander ausgetauscht werden können, damit der entsprechende Vergleich (Abgleich) entweder infrastrukturseitig oder fahrzeugseitig erfolgen kann.

Die Figur 2 zeigt eine Prinzip-Darstellung eines Fahrzeugs (100), dass eine Fahrbahn (10) / einen Fahrstreifen befährt, sowie die Folgen einer Fehljustage / einer Fehlausrichtung des Erfassungsbereiches (optischen Achse) des Umgebungserfassungssystems / der Sensorik (104), welcher sich Infolge eines Justagefehlers einstellen würde.

Die Figur 2a zeigt die Sensorik (104) am Fahrzeug (100) befindend, in ordnungsgemäßer Funktionsweise, bzw. der Erfassungsbereich (104.1) in korrekter Art nach vorne ausgerichtet. Das Fahrzeug (100) fährt in der Mitte (b/2) des dafür vorgesehenen Fahrstreifens der mehrspurigen Fahrbahn (10), welche zwei Fahrstreifen mit je der Breite (b) enthält. Das Umgebungserfassungssystem / die Sensorik (104) erkennt, dass sich das Fahrzeug (100), bzw. die Position des Fahrzeugs (100), in der Mitte (b/2) des vorgesehenen Fahrstreifens mit der Breite (b) befindet.

Die Figur 2b zeigt die Sensorik (104) analog zur Figur 2a, jedoch mit einem angenommenen Justagefehler. Das Fahrzeug (100) fährt in der Mitte (b/2) des dafür vorgesehenen Fahrstreifens der mehrspurigen Fahrbahn (10), welche zwei Fahrstreifen mit je der Breite (b) enthält. Aufgrund des gezeigten Justagefehlers erkennt die Sensorik (104), dass sich das Fahrzeug (100), bzw. die Position des Fahrzeugs (100), offensichtlich NICHT in der Mitte (b/2) des vorgesehenen Fahrstreifens befindet, da die Sensorik (104), bzw. aus dessen Bildauswertung der Rückschluss gezogen wird, dass sich das Fahrzeug (100) angeblich etwas nach rechts versetzt befindet.

Die Figur 2c zeigt die Sensorik (104), mit einem angenommenen Justagefehler gemäß Fig. 2b, wobei sich das Fahrzeug (100) leicht nach links versetzt zur Mitte (b/2) des vorgesehenen Fahrstreifens befindet. Dieser Versatz würde von einem automatischen Spurhalteassistenzsystem mit einer Sensorik (104) angestrebt werden, damit das Spurhalteassistenzsystem mit einer Sensorik (104) erkennt, dass das Fahrzeug (100), bzw. die Position des Fahrzeugs (100), sich "korrekt" in der Mitte (b/2) des vorgesehenen Fahrstreifens befindet (was natürlich falsch ist).

Im Falle eines Justagefehlers der Sensorik (104), wie in Figur 2b gezeigt, würde der Vergleich der ermittelten Fahrzeugpositionen keine Übereinstimmung ergeben, bzw. dies zu einer Warnmeldung führen, da die Positionsbestimmung durch die Sensorik (104) im Fahrzeug (100) eine Position ergeben würde, bei dieser sich das Fahrzeug (100) angeblich nicht mittig (b/2) zum Fahrstreifen befindet, wohingegen die Mittel (112.2, 112.3) der Infrastrukturanlage (112) eine Position ergeben würde, bei dieser sich das Fahrzeug (100) mittig (b/2) zum Fahrstreifen befindet, und somit der Vergleich zu keiner Übereinstimmung führt, bzw. zu einer (größeren) Abweichung führt.

Im Falle eines Justagefehlers der Sensorik (104), wie in Figur 2c gezeigt, würde (analog zur Figur 2b) der Vergleich der ermittelten Fahrzeugpositionen keine Übereinstimmung ergeben, bzw. dies zu einer Warnmeldung führen, da die Positionsbestimmung durch die Sensorik (104) im Fahrzeug (100) eine Position ergeben würde, bei dieser sich das Fahrzeug (100) angeblich mittig (b/2) zum Fahrstreifen befindet, wohingegen die Mittel (112.2, 112.3) der Infrastrukturanlage (112) eine Position ergeben würde, bei dieser sich das Fahrzeug (100) nicht mittig (b/2) zum Fahrstreifen befindet, und somit der Vergleich zu keiner Übereinstimmung führt, bzw. zu einer (größeren) Abweichung führt.

Die Ausdrucksweise "relativ zum aktuell befahrenen Fahrstreifen" ist im Lichte der Erfindung derart zu verstehen, dass die Position des Fahrzeugs (100) in Bezug zum Fahrstreifen mit der Breite (b) der mehrspurigen Fahrbahn (10) beschrieben wird, wobei die möglichen Abweichung (a) der Position des Fahrzeugs (100) als Differenz zwischen den beiden zu vergleichenden korrelierenden Messungen (Sensorik (104) gegenüber Mitteln (112.2, 112.3) der Infrastrukturanlage (112)) dargestellt werden kann (gebildet werden kann), sowohl
- als relativer Wert (xx %) zur Breite (b) des aktuell befahrenen Fahrstreifens (1a, 2a, 3a, 1b, 2b, 3b) einer mehrspurigen Fahrbahn (10), und/oder
- als absoluter Wert (xx cm) zur Breite (b) des aktuell befahrenen Fahrstreifens (1a, 2a, 3a, 1b, 2b, 3b) einer mehrspurigen Fahrbahn (10).

Zur Vermeidung von Messfehlern versteht es sich in selbstverständlicher Art, dass bei den Positionsbestimmungen durch die einzelnen Messsysteme (Sensorik (104) im Fahrzeug (100), und den Mitteln (112.2, 112.3) der Infrastrukturanlage (112)) eine zeitliche Synchronisation der Positionsbestimmung stattfindet, bzw. angestrebt wird, wobei die Synchronisation beispielsweise durch die Car-to-Infrastruktur-Kommunikation, und/oder bei einem definierten Abstand zwischen dem Fahrzeug (100) und der Infrastrukturanlage (112), und/oder (einseitig) initiiert durch (Laser-)Lichtsignal-Triggerung ausgelöst (getriggert) werden kann.

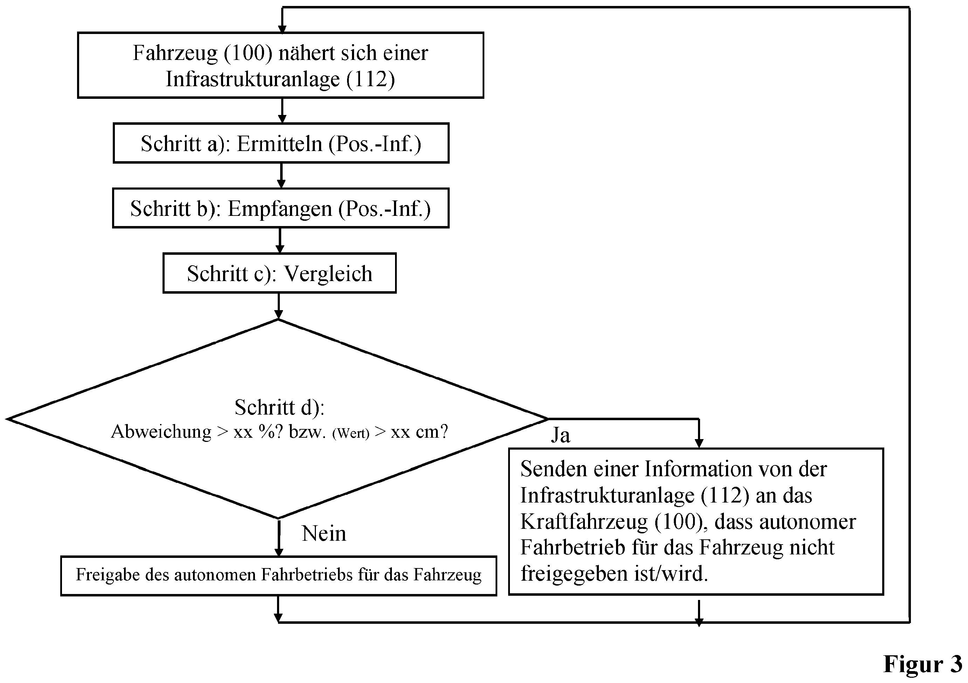

Die Figur 3 zeigt eine beispielhafte Darstellung an Verfahrensschritten bzgl. einer vergleichenden Auswertung seitens der Infrastrukturanlage (insbesondere auf die Freigabe für ein individuelles passierendes Fahrzeug gerichtet). Wie aus der Figur 3 hierzu ersichtlich ist, werden beim Verfahren Überwachen einer Sensorik (104) eines Fahrzeugs (100) und Freigabe eines autonomen Fahrbetriebs des Fahrzeugs (100), mittels Zuhilfenahme einer Infrastrukturanlage (112), seitens der Infrastrukturanlage (112) mindestens die folgenden Schritte umfassend ausgeführt:
Schritt a):
   Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels Zuhilfenahme von Mitteln (112.2, 112.3) der Infrastrukturanlage (112);
Schritt b):
   Empfangen einer Positionsinformation des Fahrzeugs (100) vom Fahrzeug (100) oder von einer Komponente des Fahrzeugs (100), basierend auf der Sensorik (104) des Fahrzeugs (100), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt;
Schritt c):
   Bestimmen einer möglichen Abweichung (a) der Position des Fahrzeugs (100), durch vergleichende Auswertung
   - der ermittelten Position des Fahrzeugs (100) mittels Mitteln (112.2, 112.3) der Infrastrukturanlage (112), gegenüber
   - der ermittelten Position des Fahrzeugs (100) mittels der Sensorik (104) des Fahrzeugs (100);
Schritt d):
   wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
      - als Reaktion bei einer Abweichung (a) größer eines vorgegebenen und/oder vorgebbaren Wertes (w),
      - eine Information von der Infrastrukturanlage (112) an das Fahrzeug (100) gesendet wird,
      - dass einer Freigabe des autonomen Fahrbetriebs des Fahrzeugs (100) nicht stattgegeben wird.
   Sofern im Schritt d) keine Abweichung (a) größer eines vorgegebenen und/oder vorgebbaren Wertes (w) festgestellt wird, erfolgt eine Freigabe für einen autonomen Fahrbetrieb / autonomen Fahrmodus für das entsprechende Fahrzeug (100), da die Sensorik (104) des Fahrzeugs (100) offensichtlich korrekt funktioniert.

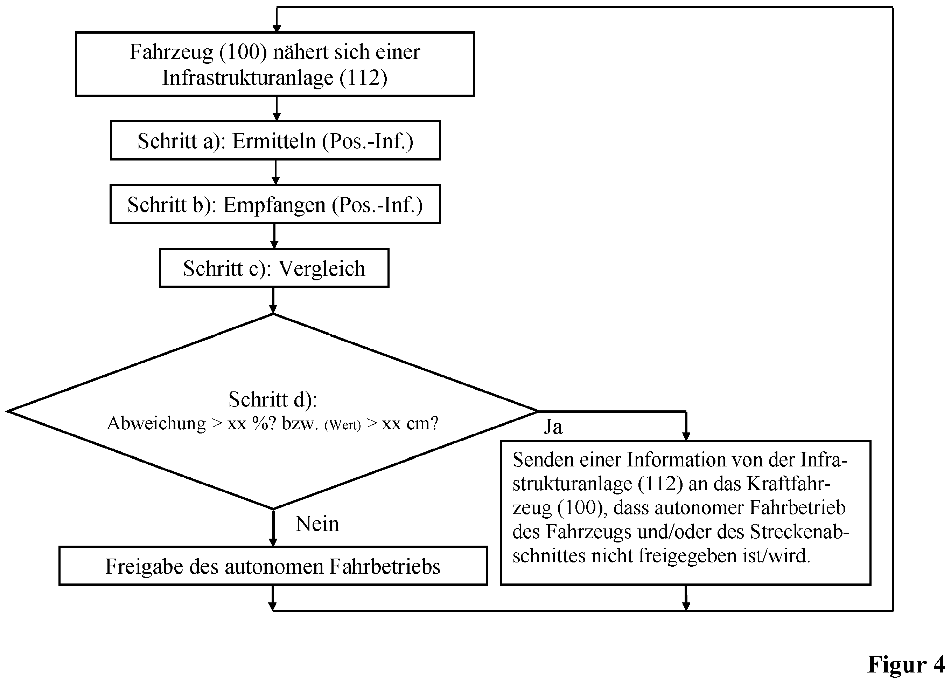

Die Figur 4 zeigt eine beispielhafte Darstellung an Verfahrensschritten bzgl. einer vergleichenden Auswertung seitens der Infrastruktur (insbesondere auf die Freigabe für einen folgenden Streckenabschnitt gerichtet). Wie aus der Figur 4 hierzu ersichtlich ist, werden beim Verfahren Überwachen einer Sensorik (104) eines Fahrzeugs (100) und Freigabe eines autonomen Fahrbetriebs für Fahrzeuge für einen folgenden Streckenabschnitt, mittels Zuhilfenahme einer Infrastrukturanlage (112), seitens der Infrastrukturanlage (112) mindestens die folgenden Schritte umfassend ausgeführt:
Schritt a):
   Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels der Sensorik (104) des Fahrzeugs (100);
Schritt b):
   Empfangen einer Positionsinformation des Fahrzeugs (100) von der Infrastrukturanlage (112), basierend mittels Zuhilfenahme von Mitteln (112.2, 112.3) der Infrastrukturanlage (112), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt;
Schritt c):
   Bestimmen einer möglichen Abweichung (a) der Position des Fahrzeugs (100), durch vergleichende Auswertung
   - der ermittelten Position des Fahrzeugs (100) mittels Mitteln (112.2, 112.3) der Infrastrukturanlage (112), gegenüber
   - der ermittelten Position des Fahrzeugs (100) mittels der Sensorik (104) des Fahrzeugs (100);
Schritt d):
   wobei im Schritt des Bestimmens einer möglichen **Ab**weichung (a) der Position des Fahrzeugs (100), im Falle einer Erkennung einer Abweichung (a) größer eines vorgegebenen und/oder vorgebbaren Wertes (w),
      - als Reaktion bei einer Abweichung (a) größer eines vorgegebenen und/oder vorgebbaren Wertes (w),
      - eine Information von der Infrastrukturanlage (112) an das Fahrzeug (100) gesendet wird,
      - dass einer Freigabe des autonomen Fahrbetriebs des Fahrzeugs (100) und/oder der Fahrzeuge (100) für den folgenden Streckenabschnitt nicht stattgegeben wird, und/oder eine bereits erfolgte Freigabe revidiert wird.
   Sofern im Schritt d) keine Abweichung (a) größer eines vorgegebenen und/oder vorgebbaren Wertes (w) festgestellt wird, erfolgt autonomer Fahrbetrieb des Fahrzeugs und/oder des Streckenabschnittes, da die Sensorik (104) des Fahrzeugs (100) offensichtlich korrekt funktioniert.

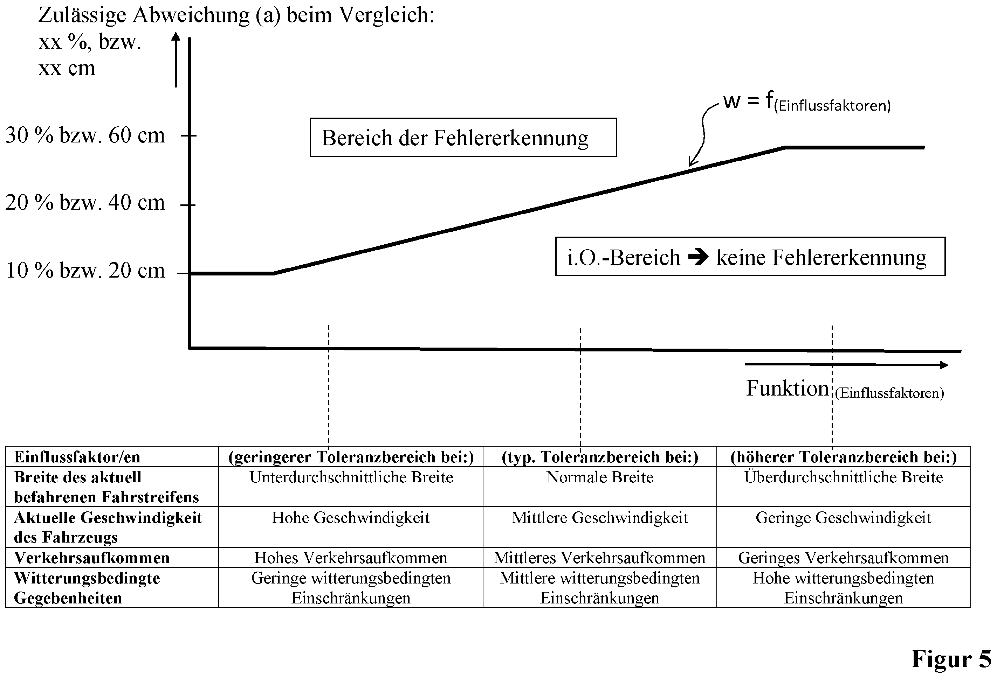

Die Figur 5 zeigt eine schematische Darstellung bezüglich des Betrags des vorgegebenen und/oder vorgebbaren Wertes, welcher mittels einer Auswahl einer Funktion bzw. Kombination an Funktionen gebildet wird. Wie aus der Figur 5 hierzu ersichtlich ist, befinden sich auf der x-Achse die möglichen Einflussfaktoren, mittels diesen die Funktion zur Bestimmung der zulässigen Abweichung (a) beim Vergleich der ermittelten Positionen des Fahrzeugs (100) relativ zum Fahrstreifen, als Einflussgrößen entsprechend berücksichtigt werden.

Wie aus der Figur 5 hierzu weiter ersichtlich ist, sind als Einflussfaktoren nachfolgende Beispiele aufgeführt:
- die breite des aktuell befahrenen Fahrstreifens:
   ∘ ob eine unterdurchschnittliche Breite (b) vorliegt,
   ∘ ob eine normale Breite (b) vorliegt,
   ∘ ob eine überdurchschnittliche Breite (b) vorliegt;
- die aktuelle Geschwindigkeit des Kraftfahrzeugs (100):
   ∘ ob eine hohe Geschwindigkeit des Fahrzeugs vorliegt,
   ∘ ob eine mittlere Geschwindigkeit des Fahrzeugs vorliegt,
   ∘ ob eine geringe Geschwindigkeit des Fahrzeugs vorliegt;
- das Verkehrsaufkommen:
   ∘ ob ein hohes Verkehrsaufkommen vorliegt,
   ∘ ob ein mittleres Verkehrsaufkommen vorliegt,
   ∘ ob ein geringes Verkehrsaufkommen vorliegt;
- die witterungsbedingten Gegebenheiten:
   ∘ ob geringe witterungsbedingte Einschränkungen vorliegen,
   ∘ ob mittlere witterungsbedingte Einschränkungen vorliegen,
   ∘ ob hohe witterungsbedingte Einschränkungen vorliegen;

Wie aus der Figur 5 weiter ersichtlich ist, befindet sich auf der y-Achse die zulässige Abweichung (a) beim Vergleich der ermittelten Positionen des Fahrzeugs (100) relativ zum Fahrstreifen. Wie aus der Figur 5 weiter ersichtlich ist, ergibt sich als Resultat ein Funktionsverlauf (w) der zulässigen Abweichung (a) beim Vergleich der ermittelten Positionen des Fahrzeugs (100) relativ zum Fahrstreifen, wobei der Funktionsverlauf (w) eine Funktion der Einflussgrößen ist. Der gezeigte Funktionsverlauf ist hierbei nur beispielhaft, und kann auch einen anderen (nicht-linearen) Funktionsverlauf annehmen. Ebenso sind die gezeigten Zahlenwerte bzw. Prozentangaben nur beispielhaft.

Wie das Beispiel der Figur 5 zeigt, beginnt die Funktion bezüglich der zulässigen Abweichung (a) beim Vergleich der ermittelten Positionen des Fahrzeugs (100) im unteren Bereich mit einer waagrechten Geraden, welche als zulässige Abweichung 10% bzw. 20 cm zulässt. Im weiteren Verlauf der Funktion steigt die zulässige Abweichung (a) beim Vergleich der ermittelten Positionen des Fahrzeugs (100) an, und geht im oberen Bereich wieder in eine mit einer waagrechten Geraden, welche als zulässige Abweichung 30% bzw. 60 cm zulässt. Wie aus der Figur 5 weiter ersichtlich ist, ist der Bereich oberhalb der beschriebenen resultieren Funktionskennlinie (w) der Bereich, bei diesem ein Fehler erkannt wird, bzw. eine Warnmeldung generiert wird, wenn beim Vergleich der ermittelten Positionen des Fahrzeugs (100) die Abweichung / Differenz der/die Wert/e die resultiere Funktionskennlinie (w) überschreiten. Wie aus der Figur 5 weiter ersichtlich ist, ist der Bereich unterhalb der beschriebenen resultieren Funktionskennlinie (w) der Bereich, bei diesem kein Fehler erkannt wird, bzw. keine Warnmeldung generiert wird, wenn beim Vergleich der ermittelten Positionen des Fahrzeugs (100) die Abweichung / Differenz der/die Wert/e die resultiere Funktionskennlinie (w) nicht überschreiten.

Wie bereits oben ausgeführt, werden beim Vergleich der ermittelten Positionen des Fahrzeugs (100) immer korrelierende Werte miteinander verglichen, welche sich auf ein bestimmtes Fahrzeug (100) beziehen, welches einen (bestimmten) Fahrstreifen an einer bestimmten Position des Fahrstreifens befährt, und die beiden Messergebnisse von der Sensorik (104) des Fahrzeugs (100), und von den Mitteln (112.2, 112.3) der Infrastrukturanlage (112) stammend sind.

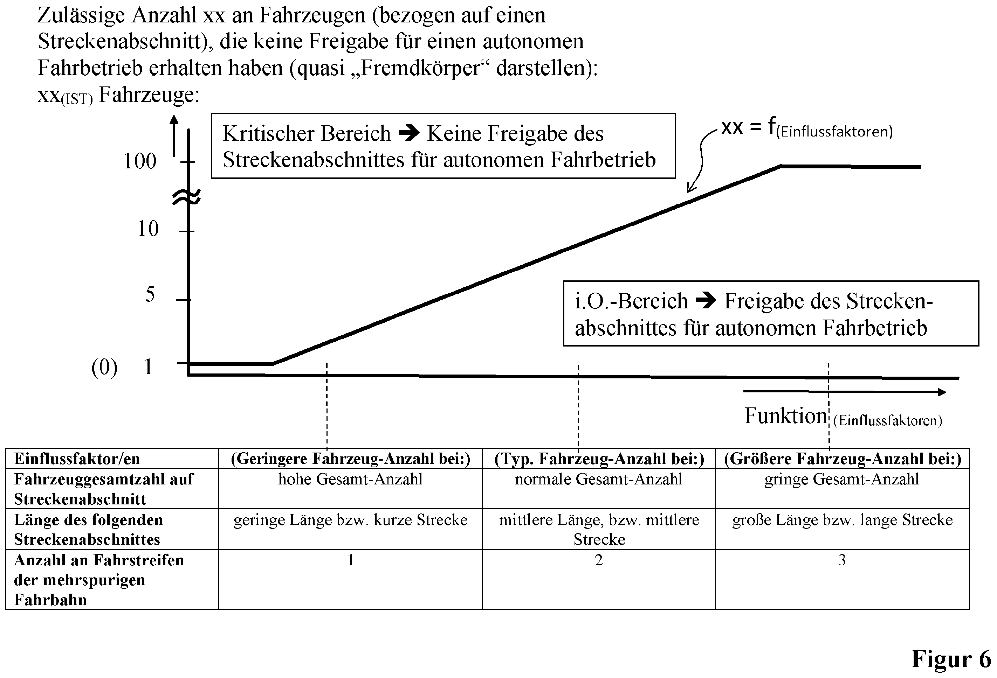

Die Figur 6 zeigt eine schematische Darstellung bezüglich der zulässigen Anzahl an Fahrzeugen (bezogen auf einen Streckenabschnitt), die keine Freigabe für einen autonomen Fahrbetrieb erhalten haben (somit quasi einen "Fremdkörper" im betreffenden Streckenabschnitt darstellen), welche mittels einer Auswahl einer Funktion bzw. Kombination an Funktionen gebildet wird. Wie aus der Figur 6 hierzu ersichtlich ist, befinden sich auf der x-Achse die möglichen Einflussfaktoren, mittels diesen die Funktion zur Bestimmung der zulässigen Anzahl (xx) an Fahrzeugen, die keine Freigabe für einen autonomen Fahrbetrieb erhalten haben, als Einflussgrößen entsprechend berücksichtigt werden.

Wie aus der Figur 6 hierzu weiter ersichtlich ist, sind als Einflussfaktoren nachfolgende Beispiele aufgeführt:
- die Fahrzeuggesamtzahl (Fahrzeuge MIT plus OHNE Freigabe) auf dem Streckenabschnitt:
   ∘ ob eine hohe Gesamt-Anzahl vorliegt,
   ∘ ob eine normale Gesamt-Anzahl vorliegt,
   ∘ ob eine geringe Gesamt-Anzahl vorliegt;
- die aktuelle Länge des folgenden Streckenabschnittes:
   ∘ ob eine geringe Länge bzw. kurze Strecke vorliegt,
   ∘ ob eine mittlere Länge bzw. mittlere Strecke vorliegt,
   ∘ ob eine große Länge bzw. lange Strecke vorliegt;
- die Anzahl an Fahrstreifen der mehrspurigen Fahrbahn:
   ∘ ob ein Fahrstreifen vorliegt,
   ∘ ob zwei Fahrstreifen vorliegen,
   ∘ ob drei Fahrstreifen vorliegen;

Wie aus der Figur 6 weiter ersichtlich ist, befindet sich auf der y-Achse die zulässige Anzahl (xx) an Fahrzeugen (bezogen auf einen Streckenabschnitt), die keine Freigabe für einen autonomen Fahrbetrieb erhalten haben (quasi einen "Fremdkörper" bzw. eine "Gefährdung / Gefahrenquelle" im Kollektiv der autonom fahrenden Fahrzeuge darstellen). Wie aus der Figur 6 weiter ersichtlich ist, ergibt sich als Resultat ein Funktionsverlauf (xx) der die zulässige Anzahl (xx) an Fahrzeugen (bezogen auf einen Streckenabschnitt), die keine Freigabe für einen autonomen Fahrbetrieb erhalten haben, wobei der Funktionsverlauf (xx) eine Funktion der Einflussgrößen ist. Der gezeigte Funktionsverlauf ist hierbei nur beispielhaft, und kann auch einen anderen (nicht-linearen) Funktionsverlauf annehmen. Ebenso sind die gezeigten Zahlenwerte bzw. Prozentangaben nur beispielhaft.

Wie das Beispiel der Figur 6 zeigt, beginnt die Funktion bezüglich der die zulässigen Anzahl (xx) an Fahrzeugen (bezogen auf einen Streckenabschnitt), die keine Freigabe für einen autonomen Fahrbetrieb erhalten haben, im unteren Bereich mit einer waagrechten Geraden, welche als zulässige Anzahl (xx) an Fahrzeugen (bezogen auf einen Streckenabschnitt), die keine Freigabe für einen autonomen Fahrbetrieb erhalten haben, Null bzw. Ein Fahrzeug zulässt. Im weiteren Verlauf der Funktion steigt die zulässige Anzahl (xx) an Fahrzeugen (bezogen auf einen Streckenabschnitt), die keine Freigabe für einen autonomen Fahrbetrieb erhalten haben an, und geht im oberen Bereich wieder in eine waagrechte Gerade über, welche als zulässige Anzahl an Fahrzeugen (die keine Freigabe für einen autonomen Fahrbetrieb erhalten haben) mit 100 zulässt. Wie aus der Figur 6 weiter ersichtlich ist, ist der Bereich oberhalb der beschriebenen resultieren Funktionskennlinie (xx) der Bereich, bei diesem keine Freigabe für einen autonomen Fahrbetrieb für einen Streckenabschnitt erteilt wird (oder eine bereits erfolgte Freigabe für den autonomen Fahrbetrieb zurückgenommen wird), wenn die Anzahl an Fahrzeugen (bezogen auf einen Streckenabschnitt), die keine Freigabe für einen autonomen Fahrbetrieb erhalten haben, diese Funktionskennlinie (xx) überschreiten. Wie aus der Figur 6 weiter ersichtlich ist, ist der Bereich unterhalb der beschriebenen resultieren Funktionskennlinie (xx) der Bereich, bei diesem keine Freigabe für einen autonomen Fahrbetrieb für einen Streckenabschnitt erteilt wird, wenn die Anzahl an Fahrzeugen (bezogen auf einen Streckenabschnitt), die keine Freigabe für einen autonomen Fahrbetrieb erhalten haben, diese Funktionskennlinie (xx) unterschreiten bzw. nicht überschreiten.

### Bezugszeichenliste:

- 10: mehrspurigen Fahrbahn
- 100: Fahrzeug / Kraftfahrzeug
- 104: Sensorik
- 104.1: Erfassungsbereich der Sensorik
- 112: Infrastrukturanlage (z.B. TraffiTower)
- 112.2: Mittel der Infrastrukturanlage (z.B. Sensorik)
- 112.2.1: Erfassungsbereich der Sensorik (112.2)
- 112.3: Mittel der Infrastrukturanlage (z.B. Sensorik)
- 112.3.1: Erfassungsbereich der Sensorik (112.3)
- car-to-i: Kommunikation zwischen Kraftfahrzeug und Infrastruktur
- b: Breite des Fahrstreifens (= 1, b)
- b/2: 50% der Breite des Fahrstreifens
- 0,4 b: 40% der Breite des Fahrstreifens
- 0,6 b: 60% der Breite des Fahrstreifens
- a: Abweichung
- w: Vorgegebener und/oder vorgebbarer Wert (xx %; xx cm)
- w: Entspricht einer Funktion_{(Einflussfaktoren)}
- xx: Vorgegebener und/oder vorgebbarer Wert (Fahrzeug-Anzahl)
- xx: Entspricht einer Funktion_{(Einflussfaktoren)}
- f: Funktion (abhängig von den Einflussfaktoren)
- 1a: Erster Fahrstreifen einer mehrspurigen Fahrbahn (10)
- 2a: Zweiter Fahrstreifen einer mehrspurigen Fahrbahn (10)
- 3a: Dritter Fahrstreifen einer mehrspurigen Fahrbahn (10)
- 1b: Erster Fahrstreifen einer mehrspurigen Fahrbahn (10)
- 2b: Zweiter Fahrstreifen einer mehrspurigen Fahrbahn (10)
- 3b: Dritter Fahrstreifen einer mehrspurigen Fahrbahn (10)

## Patentansprüche

1. Verfahren zum Überwachen einer Sensorik (104) eines Fahrzeugs (100) und Freigabe eines autonomen Fahrbetriebs des Fahrzeugs (100), mittels Zuhilfenahme einer Infrastrukturanlage (112), wobei das Verfahren seitens der Infrastrukturanlage (112) mindestens die folgenden Schritte umfasst:
a) Ermitteln einer Position des Fahrzeugs (100), relativ zum aktuell befahrenen Fahrstreifen (1a, 2a, 3a, 1b, 2b, 3b) einer mehrspurigen Fahrbahn (10), mittels Zuhilfenahme von Mitteln (112.2, 112.3) der Infrastrukturanlage (112); und
b) Empfangen einer Positionsinformation des Fahrzeugs (100) vom Fahrzeug (100) oder von einer Komponente des Fahrzeugs (100), basierend auf der Sensorik (104) des Fahrzeugs (100), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt; und
c) Bestimmen einer möglichen Abweichung (a) der Position des Fahrzeugs (100), durch vergleichende Auswertung
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100);
d) wobei im Schritt des Bestimmens einer möglichen Abweichung (a) der Position des Fahrzeugs (100), im Falle einer Erkennung einer Abweichung (a) größer eines vorgegebenen und/oder vorgebbaren Wertes (w),
- als Reaktion bei einer Abweichung (a) größer eines vorgegebenen und/oder vorgebbaren Wertes (w),
- eine Information von der Infrastrukturanlage (112) an das Fahrzeug (100) gesendet wird,
- dass einer Freigabe des autonomen Fahrbetriebs des Fahrzeugs (100) nicht stattgegeben wird.

2. Verfahren zum Überwachen einer Sensorik (104) mindestens eines Fahrzeugs (100) und Freigabe eines autonomen Fahrbetriebs für Fahrzeuge für einen folgenden Streckenabschnitt, mittels Zuhilfenahme einer Infrastrukturanlage (112), wobei das Verfahren seitens der Infrastrukturanlage (112) mindestens die folgenden Schritte umfasst:
a) Ermitteln einer Position des mindestens einen Fahrzeugs (100), relativ zum aktuell befahrenen Fahrstreifen (1a, 2a, 3a, 1b, 2b, 3b) einer mehrspurigen Fahrbahn (10), mittels Zuhilfenahme von Mitteln (112.2, 112.3) der Infrastrukturanlage (112); und
b) Empfangen einer Positionsinformation des mindestens einen Fahrzeugs (100) vom Fahrzeug (100) oder von einer Komponente des Fahrzeugs (100), basierend auf der Sensorik (104) des Fahrzeugs (100), welche die ermittelte Position des Fahrzeugs (100) relativ zum aktuell befahrenen Fahrstreifen (1a, 2a, 3a, 1b, 2b, 3b) einer mehrspurigen Fahrbahn (10) beschreibt; und
c) Bestimmen einer möglichen Abweichung (a) der Position des mindestens einen Fahrzeugs (100), durch vergleichende Auswertung
- der ermittelten Position des Fahrzeugs (100) mittels Mitteln (112.2, 112.3) der Infrastrukturanlage (112), gegenüber
- der ermittelten Position des Fahrzeugs (100) mittels der Sensorik (104) des Fahrzeugs (100);
d) wobei im Schritt des Bestimmens einer möglichen Abweichung (a) der Position des mindestens einen Fahrzeugs (100), im Falle einer Erkennung einer Abweichung (a) größer eines vorgegebenen und/oder vorgebbaren Wertes (w),
- als Reaktion bei einer Abweichung (a) größer des vorgegebenen und/oder vorgebbaren Wertes (w) bei einer Mindestanzahl an Fahrzeugen (100), welche sich gleichzeitig auf dem folgenden Streckenabschnitt befinden, und/oder sich zukünftig auf dem folgenden Streckenabschnitt befinden,
- eine Information von der Infrastrukturanlage (112) an das mindestens eine Fahrzeug (100) gesendet wird,
- dass einer Freigabe des autonomen Fahrbetriebs der Fahrzeuge (100) für den folgenden Streckenabschnitt nicht stattgegeben wird, und/oder eine bereits erfolgte Freigabe revidiert wird.

3. Verfahren nach Anspruch 2, **dadurch gekennzeichnet, dass** es sich bei der Mindestanzahl an Fahrzeugen (100), um mindestens zwei Fahrzeuge (100), oder drei Fahrzeuge (100), oder vier Fahrzeuge (100), oder fünf Fahrzeuge (100), oder sechs Fahrzeuge (100), oder sieben Fahrzeuge (100), oder acht Fahrzeuge (100), oder neun Fahrzeuge (100), oder zehn Fahrzeuge (100), oder größer zehn Fahrzeugen (100), handelt.

4. Verfahren nach einem der Ansprüche 2 oder 3, **dadurch gekennzeichnet, dass** bei der Festlegung der Mindestanzahl an Fahrzeugen (100) gemäß Anspruch 3, die Gesamtanzahl an Fahrzeugen (100) berücksichtigt wird, welche sich aktuell auf dem folgenden Streckenabschnitt befinden.

5. Verfahren nach einem der Ansprüche 2 bis 4, **dadurch gekennzeichnet, dass** bei der Festlegung der Mindestanzahl an Fahrzeugen (100) gemäß Anspruch 3, neben der Gesamtanzahl an Fahrzeugen (100), welche sich aktuell auf dem folgenden Streckenabschnitt befinden, zusätzlich die Länge des relevanten folgenden Streckenabschnitts berücksichtigt wird.

6. Verfahren nach einem der Ansprüche 2 bis 5, **dadurch gekennzeichnet, dass** bei der Festlegung der Mindestanzahl an Fahrzeugen (100) gemäß Anspruch 3, neben der Gesamtanzahl an Fahrzeugen (100), welche sich aktuell auf dem folgenden Streckenabschnitt befinden, sowie der Länge des relevanten folgenden Streckenabschnitts, zusätzlich die Anzahl an Fahrstreifen einer mehrspurigen Fahrbahn berücksichtigt wird.

7. Infrastrukturanlage (112), ausgebildet zur Durchführung eines Verfahrens gemäß einem der Ansprüche 1 bis 6.

8. System, aufweisend eine Infrastrukturanlage nach Anspruch 7 und ein Kraftfahrzeug (100), ausgebildet zur Kommunikation mit der Infrastrukturanlage (112) und zur Bereitstellung von Positionsdaten des Fahrzeugs (100), zur Unterstützung der Infrastrukturanlage (112) zur Durchführung des Verfahrens nach einem der Ansprüche 1 bis 6.

## Claims

1. Method for monitoring a sensor system (104) of a vehicle (100) and approving autonomous driving operation of the vehicle (100) with the aid of an infrastructure unit (112), wherein the method comprises at least the following steps on the part of the infrastructure unit (112):
a) ascertaining a position of the vehicle (100), relative to the currently travelled lane (1a, 2a, 3a, 1b, 2b, 3b) of a multilane roadway (10), with the aid of means (112.2, 112.3) of the infrastructure unit (112); and
b) receiving position information of the vehicle (100) from the vehicle (100) or from a component of the vehicle (100), based on the sensor system (104) of the vehicle (100), which describes the ascertained position of the vehicle (100) relative to the currently travelled lane (1a, 2a, 3a, 1b, 2b, 3b) of a multilane roadway (10); and
c) determining a possible deviation (a) of the position of the vehicle (100), by comparative evaluation
- of the ascertained position of the vehicle (100) by means of means (112.2, 112.3) of the infrastructure unit (112) in relation to
- the ascertained position of the vehicle (100) by means of the sensory system (104) of the vehicle (100);
d) wherein in the step of determining a possible deviation (a) of the position of the vehicle (100), in case of a recognition of a deviation (a) greater than a specified and/or specifiable value (w),
- as a reaction upon a deviation (a) greater than a specified and/or specifiable value (w)
- information is sent from the infrastructure unit (112) to the vehicle (100)
- that an approval of the autonomous driving operation of the vehicle (100) will not take place.

2. Method for monitoring a sensor system (104) of at least one vehicle (100) and approving autonomous driving operation for vehicles for a following route section with the aid of an infrastructure unit (112), wherein the method comprises at least the following steps on the part of the infrastructure unit (112):
a) ascertaining a position of the at least one vehicle (100), relative to the currently travelled lane (1a, 2a, 3a, 1b, 2b, 3b) of a multilane roadway (10), with the aid of means (112.2, 112.3) of the infrastructure unit (112); and
b) receiving position information of the at least one vehicle (100) from the vehicle (100) or from a component of the vehicle (100), based on the sensor system (104) of the vehicle (100), which describes the ascertained position of the vehicle (100) relative to the currently travelled lane (1a, 2a, 3a, 1b, 2b, 3b) of a multilane roadway (10); and
c) determining a possible deviation (a) of the position of the at least one vehicle (100), by comparative evaluation
- of the ascertained position of the vehicle (100) by means of means (112.2, 112.3) of the infrastructure unit (112) in relation to
- the ascertained position of the vehicle (100) by means of the sensor system (104) of the vehicle (100);
d) wherein in the step of determining a possible deviation (a) of the position of the at least one vehicle (100), in case of a recognition of a deviation (a) greater than a specified and/or specifiable value (w),
- as a reaction upon a deviation (a) greater than the specified and/or specifiable value (w) for a minimum number of vehicles (100) simultaneously located on the following route section and/or located on the following route section in the future
- information is sent from the infrastructure unit (112) to the at least one vehicle (100)
- that an approval of the autonomous driving operation of the vehicles (100) for the following route section will not take place, and/or an approval which has already taken place will be amended.

3. Method according to Claim 2, **characterized in that** the minimum number of vehicles (100) is at least two vehicles (100), or three vehicles (100), or four vehicles (100), or five vehicles (100), or six vehicles (100), or seven vehicles (100), or eight vehicles (100), or nine vehicles (100), or ten vehicles (100), or greater than ten vehicles (100).

4. Method according to either of Claims 2 and 3, **characterized in that**, in the definition of the minimum number of vehicles (100) according to Claim 3, the total number of vehicles (100) which are currently located on the following route section is taken into consideration.

5. Method as claimed according to any one of Claims 2 to 4, **characterized in that**, in the definition of the minimum number of vehicles (100) according to Claim 3, in addition to the total number of vehicles (100) which are currently located on the following route section, in addition the length of the relevant following route section is taken into consideration.

6. Method according to any one of Claims 2 to 5, **characterized in that**, in the definition of the minimum number of vehicles (100) according to Claim 3, in addition to the total number of vehicles (100) which are currently located on the following route section, and the length of the relevant following route section, in addition the number of lanes of a multilane roadway is taken into consideration.

7. Infrastructure unit (112) designed to carry out a method according to any one of Claims 1 to 6.

8. System comprising an infrastructure unit according to Claim 7 and a motor vehicle (100), designed to communicate with the infrastructure unit (112) and to provide position data of the vehicle (100) to assist the infrastructure unit (112) to carry out the method according to any one of Claims 1 to 6.

## Revendications

1. Procédé de surveillance d'un système de capteur (104) d'un véhicule (100) et de libération d'une opération de conduite autonome du véhicule (100), à l'aide d'un système d'infrastructure (112), le procédé comprenant au moins les étapes suivantes qui sont mises en œuvre par le système d'infrastructure (112) :
a) la détermination de la position du véhicule (100) par rapport à la voie (1a, 2a, 3a, 1b, 2b, 3b) d'une route à voies multiples (10) actuellement parcourue, à l'aide de moyens (112.2, 112.3) du système d'infrastructure (112) ;
b) la réception d'informations de position du véhicule (100) en provenance du véhicule (100) ou en provenance d'un composant du véhicule (100), sur la base du système de capteur (104) du véhicule (100), lesdites informations de position décrivant la position déterminée du véhicule (100) par rapport à la voie (1a, 2a, 3a, 1b, 2b, 3b) d'une route à voies multiples (10) actuellement parcourue ; et
c) la détermination d'un éventuel écart (a) de la position du véhicule (100), en effectuant une analyse comparative
- de la position déterminée du véhicule (100) à l'aide de moyens (112.2, 112.3) du système d'infrastructure (112), par rapport à
- la position déterminée du véhicule (100) à l'aide du dispositif de capteur (104) du véhicule (100) ;
d) dans lequel, à l'étape de détermination d'un éventuel écart (a) de la position du véhicule (100), en cas de détection d'un écart (a) supérieur à une valeur (w) prédéfinie et/ou pouvant être prédéfinie,
- en réaction à un écart (a) supérieur à une valeur (w) prédéfinie et/ou pouvant être prédéfinie,
- des informations sont envoyées par le système d'infrastructure (112) au véhicule (100),
- selon lesquelles une libération de l'opération de conduite autonome du véhicule (100) n'est pas accordée.

2. Procédé de surveillance d'un système de capteur (104) d'un véhicule (100) et de libération d'une opération de conduite autonome pour des véhicules pour une section d'itinéraire suivante, à l'aide d'un système d'infrastructure (112), le procédé comprenant au moins les étapes suivantes qui sont mises en œuvre par le système d'infrastructure (112) :
a) la détermination d'une position dudit au moins un véhicule (100) par rapport à la voie (1a, 2a, 3a, 1b, 2b, 3b) d'une route à voies multiples (10) actuellement parcourue, à l'aide de moyens (112.2, 112.3) du système d'infrastructure (112) ; et
b) la réception d'informations de position du véhicule (100) en provenance du véhicule (100) ou en provenance d'un composant du véhicule (100), sur la base du système de capteur (104) du véhicule (100), lesdites informations de position décrivant la position déterminée du véhicule (100) par rapport à la voie (1a, 2a, 3a, 1b, 2b, 3b) d'une route à voies multiples (10) actuellement parcourue ; et
c) la détermination d'un éventuel écart (a) de la position dudit au moins un véhicule (100), en effectuant une analyse comparative
- de la position déterminée du véhicule (100) à l'aide de moyens (112.2, 112.3) du système d'infrastructure (112), par rapport à
- la position déterminée du véhicule (100) à l'aide du dispositif de capteur (104) du véhicule (100) ;
d) dans lequel, à l'étape de détermination d'un éventuel écart (a) de la position dudit au moins un véhicule (100), en cas de détection d'un écart (a) supérieur à une valeur (w) prédéfinie et/ou pouvant être prédéfinie,
- en réaction à un écart (a) supérieur à la valeur (w) prédéfinie et/ou pouvant être prédéfinie pour un nombre minimal de véhicules (100) qui se trouvent simultanément sur la section d'itinéraire suivante et/ou se trouveront à l'avenir sur la section d'itinéraire suivante,
- des informations sont envoyées par le système d'infrastructure (112) audit au moins un véhicule (100),
- selon lesquelles une libération de l'opération de conduite autonome des véhicules (100) pour la section d'itinéraire suivante n'est pas accordée, et/ou une libération déjà effectuée est révisée.

3. Procédé selon la revendication 2, **caractérisé en ce que** le nombre minimal de véhicules (100) est d'au moins deux véhicules (100), ou trois véhicules (100), ou quatre véhicules (100), ou cinq véhicules (100), ou six véhicules (100), ou sept véhicules (100), ou huit véhicules (100), ou neuf véhicules (100), ou dix véhicules (100), ou plus de dix véhicules (100).

4. Procédé selon l'une quelconque des revendications 2 ou 3, **caractérisé en ce que** lors de la détermination du nombre minimal de véhicules (100) selon la revendication 3, le nombre total de véhicules (100) qui se trouvent actuellement sur la section d'itinéraire suivante est pris en compte.

5. Procédé selon l'une quelconque des revendications 2 à 4, **caractérisé en ce que** lors de la détermination du nombre minimal de véhicules (100) selon la revendication 3, en plus du nombre total de véhicules (100) qui se trouvent actuellement sur la section d'itinéraire suivante, la longueur de la section d'itinéraire suivante pertinente est en outre prise en compte.

6. Procédé selon l'une quelconque des revendications 2 à 5, **caractérisé en ce que** lors de la détermination du nombre minimal de véhicules (100) selon la revendication 3, en plus du nombre total de véhicules (100) qui se trouvent actuellement sur la section d'itinéraire suivante, ainsi que de la longueur de la section d'itinéraire suivante pertinente, le nombre de voies d'une route à voies multiples est en outre pris en compte.

7. Installation d'infrastructure (112), configurée pour la mise en œuvre d'un procédé selon l'une quelconque des revendications 1 à 6.

8. Système, comprenant un système d'infrastructure selon la revendication 7 et un véhicule à moteur (100), configuré pour communiquer avec le système d'infrastructure (112) et pour mettre à disposition des données de position du véhicule (100), en vue d'un soutien apporté au système d'infrastructure (112) pour la mise en œuvre du procédé selon l'une quelconque des revendications 1 à 6.
